# EUROPEAN PATENT APPLICATION

(11) **EP 4 579 286 A1**
(43) Date of publication of application: **02.07.2025**
(21) Application number: 23857148.3
(22) Date of filing: 03.08.2023
(51) Int. Cl.: G01T 1/20, G21K 5/02, G01N 23/04, G01N 23/18

(54) **X-RAY INSPECTING DEVICE AND X-RAY INSPECTING METHOD**

(30) Priority: 23.08.2022 JP 2022132549
(71) Applicant: Toray Industries, Inc., Tokyo 103-8666 (JP)
(72) Inventor: YAMAMURA, Ayuki, Otsu-shi, Shiga 520-8558 (JP); HAYASHI, Shohei, Otsu-shi, Shiga 520-8558 (JP); SAKUMA, Atsushi, Otsu-shi, Shiga 520-8558 (JP)
(74) Representative: Hoefer & Partner Patentanwälte mbB
(86) International application number: PCT/JP2023/028447
(87) International publication number: WO 2024/043034

(57) **Abstract**

An X-ray inspection device 1 includes an X-ray emission device 2 configured to emit X-rays toward an inspected object OB, a scintillator 4 configured to convert X-rays incident through the inspected object OB into visible light, and an imaging device 5 configured to image the visible light from the scintillator 4 to generate an X-ray image. The scintillator 4 is disposed such that a boundary BO between an incident surface 41 on which X-rays are incident and a first side surface 42 intersecting the incident surface 41 is located within an X-ray emission range SP. The imaging device 5 is disposed so as to face the first side surface 42 and images visible light emitted from a first region Ar1 of an entire region of the first side surface 42, the entire region of the first side surface 42 being divided into two regions of the first region Ar1 including the boundary BO and a second region Ar2 excluding the first region Ar1.

## Description

### Field

The present invention relates to an X-ray inspection device and an X-ray inspection method. Background

Conventionally, there has been known an X-ray inspection device that emits X-rays to an inspected object, converts the X-rays passing through the inspected object into visible light by a scintillator (emits fluorescence by the X-rays and emits visible light), and images the visible light by an imaging device to generate an X-ray image (see, for example, Patent Literatures 1 and 2).

The X-ray inspection device described in Patent Literature 1 is a so-called transmission imaging type X-ray inspection device. Specifically, the transmission imaging type X-ray inspection device generates an X-ray image by imaging visible light emitted from a surface of the scintillator opposite to an incident surface on which X-rays are incident.

The X-ray inspection device described in Patent Literature 2 is a so-called reflection imaging type X-ray inspection device. Specifically, the reflection imaging type X-ray inspection device generates an X-ray image by imaging visible light emitted from an incident surface of the scintillator on which X-rays are incident.

### Citation List

### Patent Literature

Patent Literature 1: JP H01-262451 A
Patent Literature 2: JP 2020-160079 A

### Summary

### Technical Problem

However, in the transmission imaging type X-ray inspection device described in Patent Literature 1, when the X-rays are incident on the scintillator, the visible light converted by the scintillator travels inside the scintillator and is absorbed inside the scintillator. Therefore, the luminance of the visible light emitted from the surface opposite to the incident surface is low, and a dark X-ray image is obtained. In addition, when a particle type scintillator is employed, visible light traveling inside the scintillator is likely to scatter inside the scintillator. Therefore, an unclear X-ray image is obtained

That is, in the transmission imaging type X-ray inspection device described in Patent Literature 1, there is a problem that a dark or unclear X-ray image is obtained, and it is difficult to obtain an X-ray image suitable for inspection.

Furthermore, in the reflection imaging type X-ray inspection device described in Patent Literature 2, it is necessary to advance the visible light emitted from the incident surface of the scintillator on which X-rays are incident toward the imaging device, and thus it is necessary to tilt the scintillator with respect to the inspected object. Therefore, the distance between the inspected object and the scintillator becomes relatively large. As a result, blur (penumbra) occurring in the X-ray image becomes large, and an unclear X-ray image is obtained.

That is, in the reflection imaging type X-ray inspection device described in Patent Literature 2, there is a problem that an unclear X-ray image is obtained, and it is difficult to obtain an X-ray image suitable for inspection.

Against this background, there is a demand for a technique capable of obtaining an X-ray image suitable for inspection.

The present invention has been made in view of the above, and an object thereof is to provide an X-ray inspection device and an X-ray inspection method capable of obtaining an X-ray image suitable for inspection.

### Solution to Problem

To solve the problem described above and to achieve the object, an X-ray inspection device according to the present invention includes: an X-ray emission device configured to emit X-rays toward an inspected object; a scintillator configured to convert the X-rays incident through the inspected object into visible light; and an imaging device configured to image the visible light from the scintillator to generate an X-ray image. The scintillator is disposed such that a boundary between an incident surface on which the X-rays are incident and a first side surface intersecting the incident surface is located within an emission range of the X-rays, and the imaging device is arranged so as to face the first side surface, and is configured to image the visible light emitted from a first region of an entire region of the first side surface, the entire region of the first side surface being divided into two regions of the first region including the boundary and a second region excluding the first region.

The X-ray inspection device according to the present invention further includes an X-ray shielding member that is disposed between the inspected object and the scintillator and is configured to shield the X-rays incident on a fourth region of an entire region of the incident surface, the entire region of the incident surface being divided into two regions of a third region including the boundary and the fourth region excluding the third region.

In the scintillator of the X-ray inspection device according to the present invention, a dimension between the first side surface and a second side surface opposite to the first side surface is set to 30 µm or more and 500 µm or less.

The X-ray inspection device according to the present invention further includes an image analysis device configured to analyze the X-ray image. The image analysis device is configured to estimate a feature amount of an abnormal part present in the inspected object based on a luminance distribution of the visible light along an incident direction of the X-rays in the X-ray image.

In the X-ray inspection device according to the present invention, the X-ray emission device and the scintillator are installed such that a width of a penumbra represented by (L2 - L1) × R/L1 is 30 µm or less, a distance from an X-ray focal point of the X-ray emission device to the inspected object being L1 [mm], a distance from the X-ray focal point to the scintillator being L2 [mm], a diameter of the X-ray focal point being R [µm].

The X-ray inspection device according to the present invention further includes a transfer device configured to move the inspected object relative to the X-ray emission device, the scintillator, and the imaging device in a direction substantially perpendicular to the first side surface, or repeat the relative movement and stopping.

An X-ray inspection method according to the present invention includes: a scintillator disposing step of disposing a scintillator such that a boundary between an incident surface of the scintillator on which X-rays are incident and a first side surface intersecting the incident surface is located within an emission range of the X-rays; an imaging device disposing step of disposing an imaging device so as to face the first side surface; an X-ray emission step of emitting the X-rays from an X emission device toward an inspected object; and an imaging step of, by the imaging device, imaging visible light to generate an X-ray image, the visible light being converted from the X-rays, which are incident on the scintillator via the inspected object, by the scintillator. In the imaging step, the visible light emitted from a first region of an entire region of the first side surface is imaged by the imaging device, the entire region of the first side surface being divided into two regions of the first region including the boundary and a second region excluding the first region.

The X-ray inspection method according to the present invention further includes an X-ray shielding member disposing step of disposing an X-ray shielding member configured to shield the X-rays between the inspected object and the scintillator to shield the X-rays incident on a fourth region, an entire region of the incident surface being divided into two regions of a third region including the boundary and the fourth region excluding the third region.

The X-ray inspection method according to the present invention further includes an image analysis step of analyzing the X-ray image. In the image analysis step, a feature amount of an abnormal part present in the inspected object is estimated on the basis of a luminance distribution of the visible light along an incident direction of the X-rays in the X-ray image.

The X-ray inspection method according to the present invention further includes a positional relationship adjustment step of adjusting a positional relationship between the X-ray emission device and the scintillator. In the positional relationship adjustment step, a positional relationship between the X-ray emission device and the scintillator is adjusted such that a width of a penumbra represented by (L2 - L1) × R/L1 is 1/6 or less of a diameter of a defect to be detected with respect to the inspected object, a distance from an X-ray focal point of the X-ray emission device to the inspected object being L1 [mm], a distance from the X-ray focal point to the scintillator being L2 [mm], a diameter of the X-ray focal point being R [µm].

The X-ray inspection method according to the present invention further includes a transfer step of moving the inspected object relative to the X-ray emission device, the scintillator, and the imaging device in a direction substantially perpendicular to the first side surface, or repeating the relative movement and stopping. Advantageous Effects of Invention

According to the X-ray inspection device and the X-ray inspection method of the present invention, an X-ray image suitable for inspection can be obtained.

### Brief Description of Drawings

FIG. 1 is a diagram illustrating an X-ray inspection device according to a first embodiment.
FIG. 2 is a flowchart illustrating an X-ray inspection method.
FIG. 3 is a diagram for describing Step S1.
FIG. 4 is a diagram for describing Step S5.
FIG. 5 is a diagram illustrating an X-ray inspection device according to a second embodiment.
FIG. 6 is a diagram illustrating an effect of the second embodiment.
FIG. 7 is a diagram illustrating an X-ray inspection device according to a third embodiment.
FIG. 8 is a diagram illustrating an effect of the third embodiment.
FIG. 9 is a diagram for describing a modification of the first to third embodiments.

### Description of Embodiments

Hereinafter, modes for carrying out the present invention (hereinafter referred to as embodiments) will be described with reference to the drawings. Note that the present invention is not limited by the embodiments described below. Furthermore, in the description of the drawings, the same parts are denoted by the same reference numerals.

### (First embodiment)

### [Configuration of X-ray inspection device]

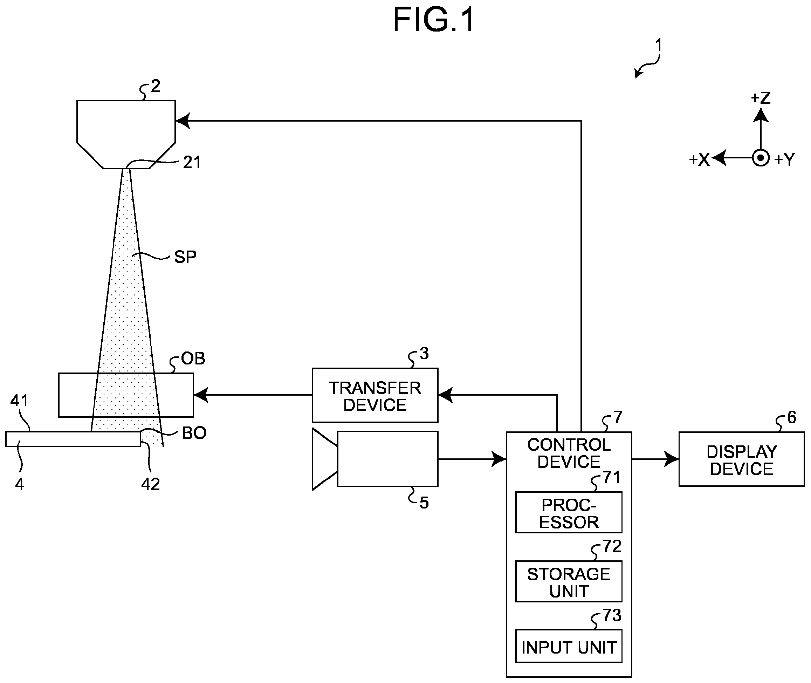

FIG. 1 is a diagram illustrating an X-ray inspection device 1 according to a first embodiment.

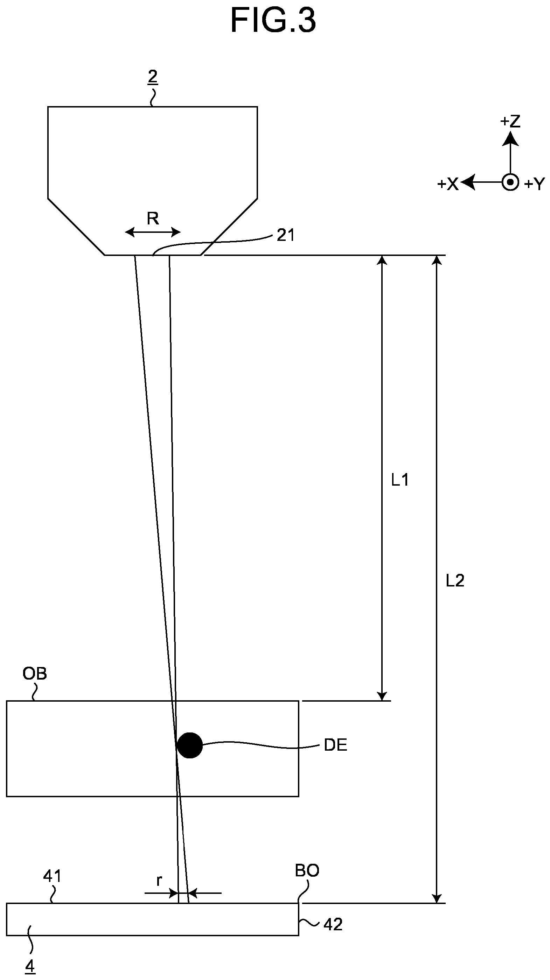

The X-ray inspection device 1 emits X-rays to an inspected object OB (FIG. 1) such as a film or a fiber, converts the X-rays transmitted through the inspected object OB into visible light, and captures the visible light to generate an X-ray image. Then, the X-ray inspection device 1 analyzes the X-ray image to estimate the feature amount of a defect DE (see FIG. 3) such as a metal foreign substance in the inspected object OB.

Note that the inspected object OB is not limited to a film or a fiber, but may be a paper, a resin, an integrated circuit, or the like.

As illustrated in FIG. 1, the X-ray inspection device 1 includes an X-ray emission device 2, a transfer device 3, a scintillator 4, an imaging device 5, a display device 6, and a control device 7.

Note that in the following description of the configuration of the X-ray inspection device 1, an axis along the vertical direction is defined as a Z axis, and two axes orthogonal to the Z axis are defined as an X axis and a Y axis. In FIG. 1, the Z axis is an axis along the up-down direction. The X axis is an axis along the left-right direction. Furthermore, the Y axis is an axis orthogonal to the paper surface of FIG. 1.

The X-ray emission device 2 emits a conical X-ray beam (cone beam) from an X-ray focal point 21 (FIG. 1) toward the inspected object OB under the control of the control device 7. In FIG. 1, an emission range SP of the conical X-ray beam is expressed by dots. In the first embodiment, the emission direction of X-rays from the X-ray emission device 2 is the -Z-axis direction (downward in FIG. 1).

Note that the X-ray emission device 2 may be a closed type or an open type, and may be a millifocus type or a microfocus type.

The transfer device 3 includes a transfer roller, a belt conveyor, and the like, and transfers the inspected object OB while holding the inspected object OB under the control of the control device 7. In the first embodiment, the transfer direction of the inspected object OB is the - X-axis direction (rightward in FIG. 1). The -X axis direction is a direction substantially perpendicular to a first side surface 42 described later.

As illustrated in FIG. 1, the scintillator 4 is formed of a plate body having a rectangular shape in plane view, and is disposed on the -Z axis side of the inspected object OB with the plate surface substantially parallel to the XY plane. Then, the scintillator 4 converts the X-rays incident after passing through the inspected object OB into visible light (fluorescence emission by the X-ray).

Here, in the scintillator 4, the X-rays transmitted through the inspected object OB are incident on the plate surface on the +Z axis side (upper side in FIG. 1), the plate surface corresponding to an incident surface 41 (FIG. 1) according to the present invention. In the scintillator 4, the side surface on the -X axis side intersects the incident surface 41 and corresponds to the first side surface 42 (FIG. 1) according to the present invention.

Note that the scintillator 4 may be of a particle type or a single crystal type.

The imaging device 5 includes an imaging element such as a charge coupled device (CCD) or a complementary metal oxide semiconductor (CMOS) that receives incident light and converts the light into an electric signal, and is a camera that captures visible light from the scintillator 4 to generate an X-ray image. Then, the imaging device 5 outputs the generated X-ray image data to the control device 7.

Note that the imaging device 5 may be a line sensor camera, an area sensor camera, or a time delay integration type camera.

The display device 6 includes a display using liquid crystal, organic electro luminescence (EL), or the like, and displays various images such as an X-ray image under the control of the control device 7.

The control device 7 integrally controls the entire operation of the X-ray inspection device 1. As illustrated in FIG. 1, the control device 7 includes a processor 71, a storage unit 72, and an input unit 73.

The processor 71 is implemented by executing various programs stored in the storage unit 72 by a controller such as a central processing unit (CPU) or a micro processing unit (MPU), and controls the entire operation of the X-ray inspection device 1.

Note that the processor 71 is not limited to a CPU or an MPU, and may be configured by an integrated circuit such as an application specific integrated circuit (ASIC) or a field-programmable gate array (FPGA). The function of the processor 71 will be described in "X-ray inspection method" described later.

In addition to various programs executed by the processor 71, the storage unit 72 stores data and the like necessary for the processor 71 to perform processing.

The input unit 73 includes a button, a switch, a touch panel, and the like that receive a user operation by an operator, and outputs an operation signal corresponding to the user operation to the processor 71. Note that part or all of the functions of the input unit 73 may be arranged on the display screen of the display device 6 as a touch panel.

### [X-ray inspection method]

Next, an X-ray inspection method using the above-described X-ray inspection device 1 will be described.

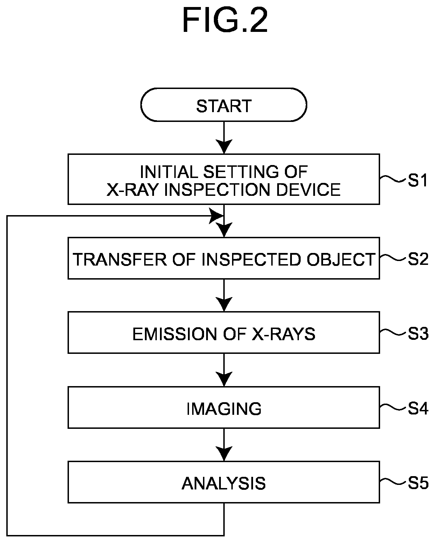

FIG. 2 is a flowchart illustrating the X-ray inspection method.

First, the operator performs initial setting of the X-ray inspection device 1 (Step S1).

FIG. 3 is a diagram illustrating Step S1. Specifically, FIG. 3 is a diagram illustrating a positional relationship among the X-ray emission device 2, the inspected object OB, and the scintillator 4. In FIG. 3, reference sign "R" is a diameter [µm] of the X-ray focal point 21. Reference sign "L1" is a distance [mm] from the X-ray focal point 21 to the inspected object OB. Furthermore, reference sign "L2" is a distance [mm] from the X-ray focal point 21 to the scintillator 4. Reference sign "r" is a width [µm] of a penumbra (blur) SH.

Here, the penumbra SH in X-ray inspection will be described.

In X-ray inspection, when the distance (L2 - L1) from the inspected object OB to the scintillator 4 is increased and the shadow of the defect DE such as metal foreign matter in the inspected object OB due to the emitted X-rays is geometrically increased, the detection sensitivity of the minute defect DE becomes low.

Specifically, the X-ray focal point 21 has a finite diameter R [µm]. For this reason, X-rays enter the region that should be a shadow of the defect DE, and the penumbra SH (FIG. 3) is generated. That is, since the penumbra SH is generated in the portion that should be a shadow of the defect DE, it is difficult to detect the defect DE with high accuracy.

The penumbra SH occurs at both ends of the defect DE. Therefore, the shadow of the defect DE is smaller than the original shadow by 2×r. Here, the width r of the penumbra SH is represented by (L2 - L1) × R/L1.

As a result of intensive studies, the inventor of the present application has found that it is necessary to set the width r of the penumbra SH to 1/6 or less of the diameter of the defect DE in order to reliably detect the defect DE. In the first embodiment, the diameter of the defect DE is 30 µm or more and 200 µm or less.

Then, in Step S1, the operator sets the diameter of the defect DE to be detected with respect to the inspected object OB to about 180 µm, and adjusts the distances L1 and L2 so that the width r of the penumbra SH is 1/6 (30 µm) or less of the 180 µm.

In Step S1, the operator disposes the scintillator 4 such that a boundary BO (FIG. 1) between the incident surface 41 and the first side surface 42 in the scintillator 4 is located within the X-ray emission range SP.

Furthermore, in Step S1, the worker disposes the imaging device 5 so as to face the first side surface 42.

As described above, Step S1 corresponds to a positional relationship adjustment step, a scintillator disposing step, and an imaging device disposing step according to the present invention.

After Step S1, the operator performs an operation of starting the X-ray inspection on the input unit 73. Accordingly, the processor 71 executes the following processing.

First, the processor 71 operates the transfer device 3 to transfer the inspected object OB at a predetermined speed (Step S2: transfer step).

After Step S2, the processor 71 operates the X-ray emission device 2. Then, the X-ray emission device 2 emits X-rays toward the inspected object OB (Step S3: X-ray emission step).

After Step S3, the processor 71 operates the imaging device 5. Then, the imaging device 5 images visible light to generate an X-ray image, the visible light being converted from X-rays, which are incident on the scintillator 4 via the inspected object OB, by the scintillator 4 (Step S4: imaging step). The imaging device 5 outputs the generated X-ray image data to the control device 7.

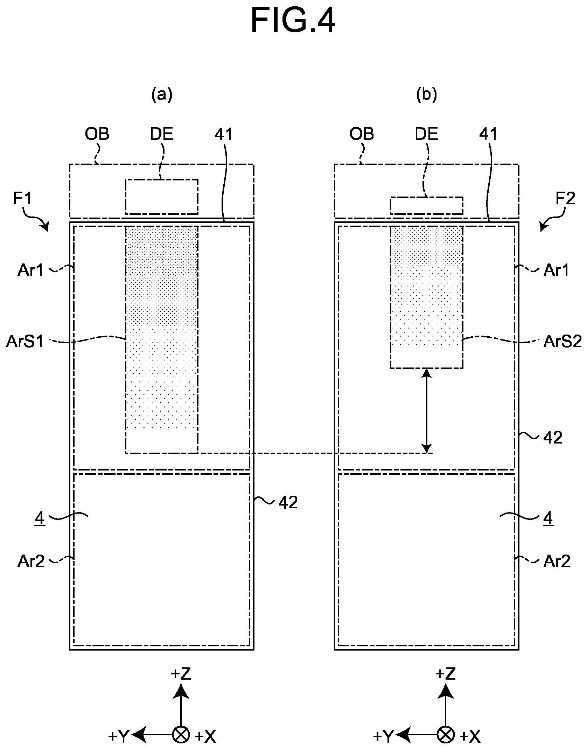

Here, assume that the entire region of the first side surface 42 is divided into two regions of a first region Ar1 (see FIG. 4) including the boundary BO and a second region Ar2 (see FIG. 4) excluding the first region Ar1. In this case, in Step S4, the visible light emitted from the first region Ar1 of the entire region of the first side surface 42 is imaged by the imaging device 5. That is, in Step S4, the visible light emitted from the region (first region Ar1) in the vicinity of the boundary BO among the entire region of the first side surface 42 is imaged by the imaging device 5.

After Step S4, the processor 71 acquires data of the X-ray image generated in Step S4 from the imaging device 5, and analyzes the X-ray image (Step S5: image analysis step). Thereafter, the processor 71 returns to Step S2.

FIG. 4 is a diagram illustrating Step S5. Specifically, (a) of FIG. 4 illustrates an X-ray image F1 when the thickness of the defect DE in the inspected object OB is large or when the density of the defect DE is high. Meanwhile, (b) of FIG. 4 illustrates an X-ray image F2 when the thickness of the defect DE in the inspected object OB is small or when the density of the defect DE is low. Note that In FIG. 4, the density of dots is increased as the luminance of the visible light converted from the X-rays is lower in regions ArS1 and ArS2 that become the shadow of the defect DE by the X-rays. Furthermore, in FIG. 4, for convenience of description, on the first side surface 42, regions other than the regions ArS1 and ArS2 are not denoted by dots.

Incidentally, when the defect DE is in the inspected object OB, as illustrated in FIG. 4, the X-rays are absorbed by the defect DE, and the regions ArS1 and ArS2 that become shadows of the defect DE are generated. In the regions ArS1 and ArS2, in regions close to the incident surface 41, the luminance of the visible light converted from the X-rays is low due to absorption of the X-rays by the defect DE. Then, in the regions ArS1 and ArS2, the luminance of the visible light gradually increases toward the -Z direction due to the influence of the visible light from regions other than the regions ArS1 and ArS2, and finally becomes substantially the same as the luminance of the visible light in the regions other than the regions ArS1 and ArS2.

Here, as can be seen by comparing (a) of FIG. 4 with (b) of FIG. 4, when the thickness and density of the defect DE are different, the luminance distribution of the visible light along the Z-axis direction such as the lengths of the regions ArS1 and ArS2 in the Z-axis direction is different. Specifically, the length of the region ArS1 in the Z-axis direction is longer than the length of the region ArS2 in the Z-axis direction. That is, there is a correlation between the feature amount such as the thickness and density of the defect DE and the luminance distribution of visible light along the Z-axis direction (incident direction of X-rays) in the X-ray image. Then, the storage unit 72 stores correlation information indicating the correlation.

Note that the luminance distribution of visible light along the Z-axis direction also depends on the length of the defect DE in the Y-axis direction. Therefore, the feature amount constituting the correlation information stored in the storage unit 72 may include the length of the defect DE in the Y-axis direction in addition to the thickness and density of the defect DE.

In Step S5, the processor 71 acquires the luminance distribution (light reception amount profile) of visible light along the Z-axis direction from the X-ray image generated in Step S4, refers to the correlation information stored in the storage unit 72, and estimates the feature amount corresponding to the luminance distribution. That is, the control device 7 corresponds to an image analysis device according to the present invention.

Here, the length of the scintillator 4 in the Z-axis direction (up-down direction in FIG. 4) is preferably 200 µm or more in order to acquire the light reception amount profile in Step S5. The scintillator 4 has a length of about 60 to 100 mm in the Y-axis direction (left-right direction in FIG. 4).

According to the first embodiment described above, the following effects are obtained.

In the X-ray inspection device 1 according to the first embodiment, the scintillator 4 is disposed such that the boundary BO is located within the X-ray emission range SP. Moreover, the imaging device 5 is disposed so as to face the first side surface 42, and images visible light emitted from the first region Ar1 including the boundary BO among the entire region of the first side surface 42.

That is, the imaging device 5 does not image visible light transmitted through the scintillator as in the transmission imaging type X-ray inspection device described in Patent Literature 1, but images visible light emitted from the first region Ar1 on the first side surface 42. In other words, the imaging device 5 images visible light with less influence of absorption and scattering inside the scintillator 4. Therefore, a bright and clear X-ray image can be generated.

In addition, since it is not necessary to tilt the scintillator with respect to the inspected object as in the reflection imaging type X-ray inspection device described in Patent Literature 2, the scintillator 4 can be brought close to the inspected object OB. Therefore, the width r of the penumbra SH generated in the X-ray image can be reduced, and a clear X-ray image can be generated.

As described above, according to the X-ray inspection device 1 of the first embodiment, an X-ray image suitable for inspection can be obtained.

Incidentally, in the reflection imaging type X-ray inspection device described in Patent Literature 2, the imaging device needs to image the incident surface of the scintillator. For this reason, the inspected object enters the imaging visual field of the imaging device, the incident surface of the scintillator is easily blocked by the inspected object, and it is difficult to set the installation position of the imaging device.

On the other hand, in the X-ray inspection device 1 according to the first embodiment, the imaging device 5 is disposed so as to face the first side surface 42, and images the visible light emitted from the first region Ar1 on the first side surface 42. Therefore, the first region Ar1 is not blocked by the inspected object, and the imaging device 5 can be easily installed. In addition, by installing the imaging device 5 so as to face the first side surface 42, the imaging device 5 is not exposed to X-rays. Therefore, the life of the imaging device 5 can be prolonged.

Moreover, in the X-ray inspection device 1 according to the first embodiment, the X-ray emission device 2 and the scintillator 4 are installed such that the width r of the penumbra SH is 1/6 (30 µm) or less of 180 µm that is the diameter of the defect DE to be detected with respect to the inspected object OB.

Therefore, the defect DE can be reliably detected.

In the X-ray inspection device 1 of the first embodiment, the processor 71 estimates the feature amount of the defect DE existing in the inspected object OB on the basis of the luminance distribution (light reception amount profile) of visible light along the incident direction of the X-rays in the X-ray images F1 and F2.

Therefore, the feature amount (thickness and density) of the defect DE can be easily estimated by simple processing.

### (Second embodiment)

Next, a second embodiment will be described.

In the following description, the same reference numerals are given to the same configurations as those of the above-described first embodiment, and detailed descriptions thereof will be omitted or simplified.

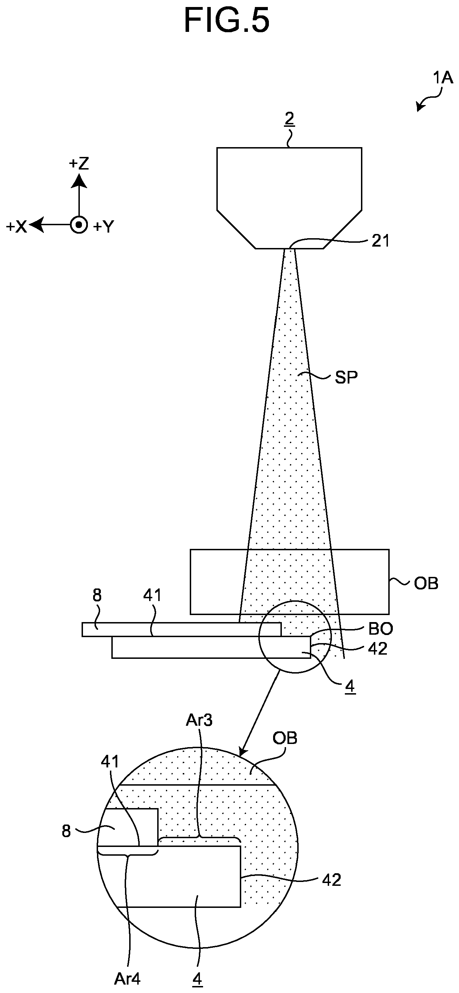

FIG. 5 is a diagram corresponding to FIG. 1, and is a diagram illustrating an X-ray inspection device 1A according to the second embodiment. Note that in FIG. 5, for convenience of description, illustration of a transfer device 3, an imaging device 5, a display device 6, and a control device 7 is omitted.

In the X-ray inspection device 1A according to the second embodiment, as illustrated in FIG. 5, an X-ray shielding member 8 is added to the X-ray inspection device 1 described in the first embodiment.

The X-ray shielding member 8 is a plate body that is made of, for example, aluminum, iron, or the like and shields X-rays. Then, as illustrated in FIG. 5, the X-ray shielding member 8 is disposed between an inspected object OB and a scintillator 4, and shields X-rays incident on a partial region of the entire region of an incident surface 41.

In an X-ray inspection method according to the second embodiment, the X-ray shielding member 8 is disposed in Step S1 in the X-ray inspection method described in the first embodiment.

Here, assume that the entire region of the incident surface 41 is divided into two regions of a third region Ar3 (FIG. 5) including a boundary BO and a fourth region Ar4 (FIG. 5) excluding the third region Ar3. In this case, in Step S1, the operator disposes the X-ray shielding member 8 between the inspected object OB and the scintillator 4 in order to shield the X-rays incident on the fourth region Ar4.

That is, Step S1 corresponds to an X-ray shielding member disposing step in addition to a positional relationship adjustment step, the scintillator disposing step, and the imaging device disposing step according to the present invention.

The length in the X-axis direction (left-right direction in FIG. 5) in the third region Ar3 is preferably 30 µm or more and 500 µm or less in consideration of the diameter of a defect DE.

According to the second embodiment described above, the following effects are obtained in addition to the same effects as those of the first embodiment described above.

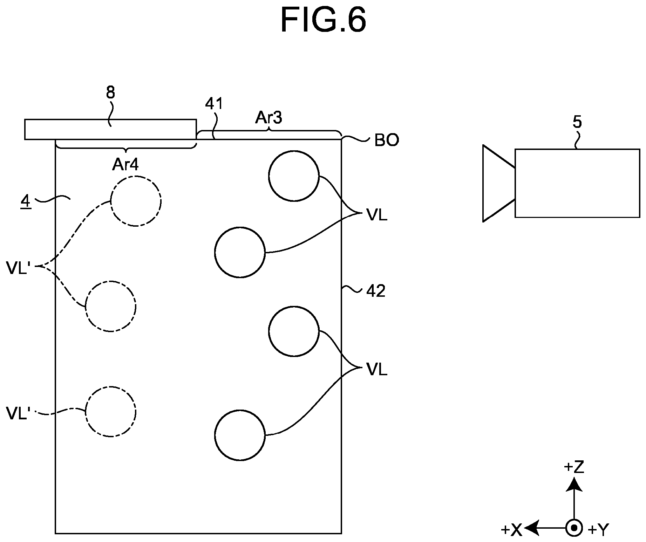

FIG. 6 is a diagram illustrating an effect of the second embodiment. Specifically, FIG. 6 illustrates a positional relationship among the X-ray shielding member 8, the scintillator 4, and the imaging device 5. Note that in FIG. 6, a circle indicated by a reference sign "VL" represents visible light converted from X-rays by the scintillator 4.

For example, as the visible light of the regions ArS1 and ArS2 described above, in addition to the visible light VL (represented by solid circle in FIG. 6) obtained by converting the X-rays transmitted through the defect DE by the scintillator 4, assume a case where visible light VL' (represented by alternate long and short dash line circle in FIG. 6) obtained by converting the X-rays not transmitted through the defect DE by the scintillator 4 is included. In this case, the luminance of the visible light VL is buried by the luminance of the visible light VL', and it is difficult to estimate the feature amount of the defect DE with high accuracy.

Therefore, the X-ray inspection device 1A according to the second embodiment further includes the X-ray shielding member 8 that shields the X-ray incident on the fourth region Ar4 among the entire region of the incident surface 41. That is, generation of the visible light VL' is prevented by disposing the X-ray shielding member 8. Therefore, the feature amount of the defect DE can be estimated with high accuracy.

### (Third embodiment)

Next, a third embodiment will be described.

In the following description, the same reference numerals are given to the same configurations as those of the above-described first embodiment, and detailed descriptions thereof will be omitted or simplified.

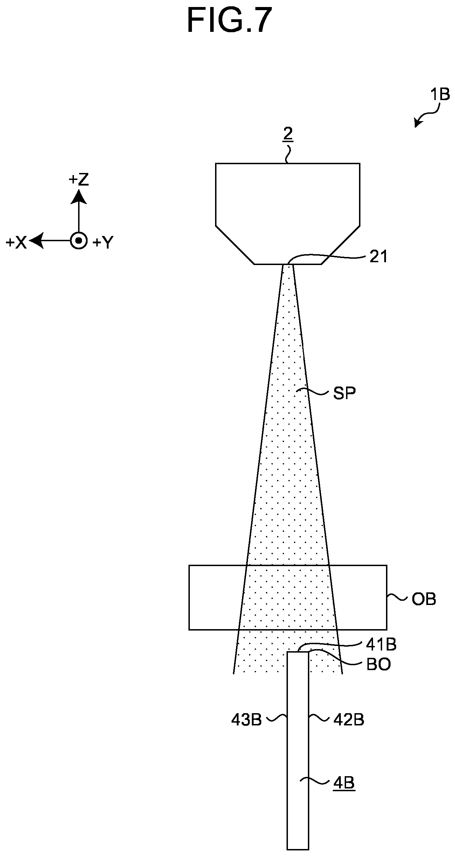

FIG. 7 is a diagram corresponding to FIG. 1, and is a diagram illustrating an X-ray inspection device 1B according to the third embodiment. Note that in FIG. 7, for convenience of description, illustration of a transfer device 3, an imaging device 5, a display device 6, and a control device 7 is omitted.

In the X-ray inspection device 1B according to the third embodiment, as illustrated in FIG. 6, a scintillator 4B having a shape different from that of the scintillator 4 is adopted in the X-ray inspection device 1 described in the first embodiment.

As illustrated in FIG. 7, the scintillator 4B is formed of a plate body having a rectangular shape in plane view, and is disposed on the -Z axis side of an inspected object OB with the plate surface substantially parallel to the XZ plane.

Here, in the scintillator 4B, the X-rays transmitted through the inspected object OB are incident on the end face on the +Z axis side (upper side in FIG. 7), the end face corresponding to an incident surface 41B according to the present invention. In the scintillator 4B, a plate surface on the -X axis side (right side in FIG. 7) intersects the incident surface 41B and corresponds to a first side surface 42B according to the present invention. Furthermore, in the scintillator 4B, the plate surface on the +X axis side (left side in FIG. 7) is opposite to the first side surface 42B, and corresponds to a second side surface 43B according to the present invention.

An X-ray inspection method according to the third embodiment is the same as the X-ray inspection method described in the first embodiment.

That is, in Step S1, as described in the aforementioned first embodiment, the operator disposes the scintillator 4B such that a boundary BO (FIG. 7) between the incident surface 41B and the first side surface 42B in the scintillator 4B is located within the X-ray emission range SP (FIG. 7).

Here, the thickness between the first and second side surfaces 42B and 43B in the scintillator 4B is preferably 30 µm or more and 500 µm or less in consideration of the diameter of a defect DE. In addition, the length of the scintillator 4B in the Z-axis direction (up-down direction in FIG. 7) is preferably 200 µm or more in order to acquire the light reception amount profile in Step S5. Furthermore, the length of the scintillator 4B in the Y-axis direction (direction orthogonal to paper surface of FIG. 7) is about 60 to 100 mm.

According to the third embodiment described above, the following effects are obtained in addition to the same effects as those of the first embodiment described above.

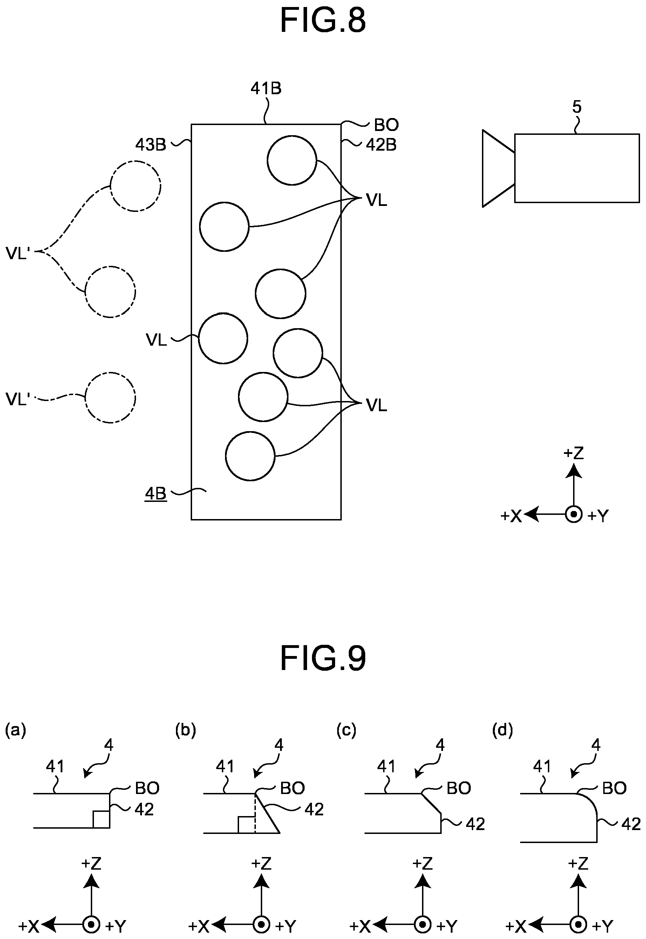

FIG. 8 is a diagram illustrating an effect of the third embodiment. Specifically, FIG. 8 illustrates a positional relationship between the scintillator 4B and the imaging device 5. In FIG. 8, a circle indicated by a reference sign "VL" represents visible light converted from X-rays by the scintillator 4B, as in FIG. 6.

In the X-ray inspection device 1B according to the third embodiment, the scintillator 4B has a thickness between the first and second side surfaces 42B and 43B set to 30 µm or more and 500 µm or less.

For this reason, it is possible to prevent the occurrence of visible light VL' (represented by alternate long and short dash line circle in FIG. 8) in which the X-rays not transmitted through the defect DE are converted by the scintillator 4B, and to configure the visible light of the regions ArS1 and ArS2 described above by the visible light VL (represented by solid circle in FIG. 8) in which the X-rays transmitted through the defect DE are converted by the scintillator 4B. Therefore, as in the second embodiment described above, the feature amount of the defect DE can be estimated with high accuracy.

### (Other embodiments)

While embodiments for carrying out the present invention have been described so far, the present invention should not be limited only by the above-described first to third embodiments.

In the above-described first to third embodiments, imaging is performed by the imaging device 5 while the inspected object OB is transferred, but the present invention is not limited thereto. In the transfer step S2, the transfer device 3 may temporarily stop the transfer of the inspected object OB when imaging is performed by the imaging device 5.

In the above-described first to third embodiments, the transfer device 3 transfers (moves) the inspected object OB in the transfer step S2, but the present invention is not limited thereto. In the transfer step S2, the transfer device 3 only needs to move the inspected object OB relative to the X-ray emission device 2, the scintillator 4 (4B), and the imaging device 5 in a direction substantially perpendicular to the first side surface 42. Hence, the X-ray emission device 2, the scintillator 4 (4B), and the imaging device 5 may be moved without moving the inspected object OB.

FIG. 9 is a diagram illustrating a modification of the first to third embodiments.

In the first to third embodiments described above, in the scintillator 4 (4B), as illustrated in (a) of FIG. 9, the incident surface 41 and the first side surface 42 intersect each other so as to be orthogonal to each other, but the present invention is not limited thereto. For example, as illustrated in (b) of FIG. 9, the incident surface 41 and the first side surface 42 may intersect at an obtuse angle. In addition, for example, as illustrated in (c) of FIG. 9, a corner between the incident surface 41 and the first side surface 42 may be chamfered. Furthermore, for example, as illustrated in (d) of FIG. 9, a corner between the incident surface 41 and the first side surface 42 may be rounded.

### Reference Signs List

1,1A,1B X-RAY INSPECTION DEVICE
2 X-RAY EMISSION DEVICE
3 TRANSFER DEVICE
4,4B SCINTILLATOR
5 IMAGING DEVICE
6 DISPLAY DEVICE
7 CONTROL DEVICE
8 X-RAY SHIELDING MEMBER
21 X-RAY FOCAL POINT
41,41B INCIDENT SURFACE
42,42B FIRST SIDE SURFACE
43B SECOND SIDE SURFACE
71 PROCESSOR
72 STORAGE UNIT
73 INPUT UNIT
Ar1 FIRST REGION
Ar2 SECOND REGION
Ar3 THIRD REGION
Ar4 FOURTH REGION
ArS1,ArS2 REGION
BO BOUNDARY
DE DEFECT
F1,F2 X-RAY IMAGE
L1,L2 DISTANCE
OB OBJECT
r WIDTH
SH PENUMBRA
SP EMISSION RANGE
VL,VL' VISIBLE LIGHT

## Claims

1. An X-ray inspection device comprising:
an X-ray emission device configured to emit X-rays toward an inspected object;
a scintillator configured to convert the X-rays incident through the inspected object into visible light; and
an imaging device configured to image the visible light from the scintillator to generate an X-ray image, wherein
the scintillator is disposed such that a boundary between an incident surface on which the X-rays are incident and a first side surface intersecting the incident surface is located within an emission range of the X-rays, and
the imaging device is arranged so as to face the first side surface, and is configured to image the visible light emitted from a first region of an entire region of the first side surface, the entire region of the first side surface being divided into two regions of the first region including the boundary and a second region excluding the first region.

2. The X-ray inspection device according to claim 1, further comprising an X-ray shielding member that is disposed between the inspected object and the scintillator and is configured to shield the X-rays incident on a fourth region of an entire region of the incident surface, the entire region of the incident surface being divided into two regions of a third region including the boundary and the fourth region excluding the third region.

3. The X-ray inspection device according to claim 1, wherein
in the scintillator, a dimension between the first side surface and a second side surface opposite to the first side surface is set to 30 µm or more and 500 µm or less.

4. The X-ray inspection device according to claim 1, further comprising
an image analysis device configured to analyze the X-ray image, wherein
the image analysis device is configured to estimate a feature amount of an abnormal part present in the inspected object based on a luminance distribution of the visible light along an incident direction of the X-rays in the X-ray image.

5. The X-ray inspection device according to claim 1, wherein
the X-ray emission device and the scintillator are installed such that a width of a penumbra represented by (L2 - L1) × R/L1 is 30 µm or less, a distance from an X-ray focal point of the X-ray emission device to the inspected object being L1 [mm], a distance from the X-ray focal point to the scintillator being L2 [mm], a diameter of the X-ray focal point being R [µm].

6. The X-ray inspection device according to claim 1, further comprising a transfer device configured to move the inspected object relative to the X-ray emission device, the scintillator, and the imaging device in a direction substantially perpendicular to the first side surface, or repeat the relative movement and stopping.

7. An X-ray inspection method comprising:
a scintillator disposing step of disposing a scintillator such that a boundary between an incident surface of the scintillator on which X-rays are incident and a first side surface intersecting the incident surface is located within an emission range of the X-rays;
an imaging device disposing step of disposing an imaging device so as to face the first side surface;
an X-ray emission step of emitting the X-rays from an X-ray emission device toward an inspected object; and
an imaging step of, by the imaging device, imaging visible light to generate an X-ray image, the visible light being converted from the X-rays, which are incident on the scintillator via the inspected object, by the scintillator, wherein
in the imaging step, the visible light emitted from a first region of an entire region of the first side surface is imaged by the imaging device, the entire region of the first side surface being divided into two regions of the first region including the boundary and a second region excluding the first region.

8. The X-ray inspection method according to claim 7, further comprising an X-ray shielding member disposing step of disposing an X-ray shielding member configured to shield the X-rays between the inspected object and the scintillator to shield the X-rays incident on a fourth region, an entire region of the incident surface being divided into two regions of a third region including the boundary and the fourth region excluding the third region.

9. The X-ray inspection method according to claim 7, further comprising
an image analysis step of analyzing the X-ray image, wherein
in the image analysis step, a feature amount of an abnormal part present in the inspected object is estimated on the basis of a luminance distribution of the visible light along an incident direction of the X-rays in the X-ray image.

10. The X-ray inspection method according to claim 7, further comprising
a positional relationship adjustment step of adjusting a positional relationship between the X-ray emission device and the scintillator, wherein
in the positional relationship adjustment step, a positional relationship between the X-ray emission device and the scintillator is adjusted such that a width of a penumbra represented by (L2 - L1) × R/L1 is 1/6 or less of a diameter of a defect to be detected with respect to the inspected object, a distance from an X-ray focal point of the X-ray emission device to the inspected object being L1 [mm], a distance from the X-ray focal point to the scintillator being L2 [mm], a diameter of the X-ray focal point being R [µm].

11. The X-ray inspection method according to claim 7, further comprising a transfer step of moving the inspected object relative to the X-ray emission device, the scintillator, and the imaging device in a direction substantially perpendicular to the first side surface, or repeating the relative movement and stopping.
